# EUROPÄISCHE PATENTANMELDUNG

(11) **EP 2 463 606 A2**
(43) Veröffentlichungstag der Anmeldung: **13.06.2012**
(21) Anmeldenummer: 11191846.2
(22) Anmeldetag: 05.12.2011
(51) Int. Cl.: F25D 23/06

(54) **Gehäuse für ein Kältegerät und Fertigungsverfahren dafür**

(30) Priorität: 09.12.2010 DE 102010062736
(71) Anmelder: BSH Bosch und Siemens Hausgeräte GmbH, 81739 München (DE)
(72) Erfinder: Engling, Thomas, 89551 Königsbronn (DE); Patchala, Dasaradh Kumar, 89231 Neu-Ulm (DE); Stelzer, Jörg, 89537 Giengen (DE)

(57) **Zusammenfassung**

Ein Gehäuse für ein Kältegerät umfasst eine Isolationsmaterialpackung und eine die Isolationsmaterialpackung von der äußeren Umgebung und von einem von dem Gehäuse umschlossenen Innenraum trennende Schale. Wenigstens ein Teil der Schale ist aus Kunststoff tiefgezogen. Dieser Teil ist mit einer Folie überzogen, die wenigstens eine Sperrschicht aus einem Material umfasst, das eine höhere Diffusionsdichtigkeit als der Kunststoff des Teils der Schale aufweist.

## Beschreibung

Die vorliegende Erfindung betrifft ein Gehäuse für ein Kältegerät, insbesondere ein Haushaltskältegerät, und ein Verfahren zu dessen Fertigung.

Derartige Gehäuse umfassen herkömmlicherweise eine Isolationsmaterialpackung, die durch eine feste Schale sowohl von der äußeren Umgebung als auch von einem von dem Gehäuse umschlossenen Innenraum getrennt ist. Diese Schale ist meist aus mehreren Teilen zusammengefügt, wobei wenigstens ein innerer Teil der Schale, der die Isolationsmaterialpackung von dem Innenraum trennt, aus einem thermoplastischen Kunststoff wie etwa Polystyrol (PS) oder Acrylnitril-Butadien-Styrol (ABS) tiefgezogen ist. Es wurde festgestellt, dass die Isolationswirkung des Gehäuses bei den herkömmlichen Haushalts-Kältegeräten im Laufe von deren Nutzung nachlässt.

Aufgabe der Erfindung ist, diesem Nachteil abzuhelfen.

Die Aufgabe wird gelöst, indem bei einem Gehäuse für ein Kältegerät mit einer Isolationsmaterialpackung und einer die Isolationsmaterialpackung von der äußeren Umgebung und von einem von dem Gehäuse umschlossenen Innenraum trennenden Schale wenigstens ein aus Kunststoff tiefgezogener Teil der Schale mit einer Folie überzogen ist, die wenigstens eine Sperrschicht aus einem Material umfasst, das eine höhere Diffusionsdichtigkeit als der Kunststoff des besagten Teils der Schale aufweist.

Als Isolationsmaterial in Kältegeräten werden allgemein hochporöse Feststoffe eingesetzt, deren Isolationswirkung entscheidend auf dem geringen Wärmeleitvermögen des in ihren Poren enthaltenen Gases beruht. Das Wärmeleitvermögen von Gasen nimmt allgemein mit steigendem Molekulargewicht ab. Die Erfindung basiert auf der Einsicht, dass eine Abnahme der Isolationswirkung eines Kältegerätegehäuses dadurch bedingt sein kann, dass ursprünglich in den Poren des Isolationsmaterials enthaltenes, schweres Gas im Laufe der Zeit abdiffundiert und durch Umgebungsluft oder deren Bestandteile ersetzt wird. Ein wichtiger Weg, auf dem bei herkömmlichen Kältegeräten eine solche Diffusion stattfindet, ist durch den tiefgezogenen inneren Teil der Schale hindurch. Die für diesen Teil verwendeten Kunststoffe wie PS, insbesondere HIPS, oder ABS weisen eine hohe

Permeabilität für Sauerstoff und Wasserdampf auf, so dass diese Gase in großer Menge in die Isolationsmaterialpackung eindringen und deren Wärmeleitfähigkeit heraufsetzen können. In dem erfindungsgemäß dieser Teil der Schale mit einer diffusionsdichten Sperrschicht überzogen wird, kann die Permeabilität der Schalen bei geringen Materialkosten und ohne Abstriche an ihrer mechanischen Belastbarkeit erheblich reduziert werden, so dass die Isolationswirkung des Gehäuses über lange Zeit erhalten bleibt.

Es wäre zwar möglich, eine ähnliche Reduzierung der Permeabilität zu erreichen, indem ein aus mehreren koextrudierten Schichten, darunter eine Sperrschicht, bestehender Kunststoffrohling tiefgezogen wird, um so ein von vornherein diffusionsdichtes Schalenteil zu erhalten, doch erfordert sowohl die Fertigung des koextrudierten Flachmaterials für die benötigten Rohlinge als auch deren Weiterverarbeitung erhebliche Investitionen in Verarbeitungsmaschinen und Qualitätskontrolle. Indem erfindungsgemäß der herkömmliche tiefgezogene Schalenteil lediglich durch eine darüber gezogene, eine Sperrschicht bildende Folie ergänzt wird, können existierende Tiefziehmaschinen auch für die Fertigung des erfindungsgemäßen Gehäuses eingesetzt werden, so dass die für den Einsatz der Erfindung erforderlichen Investitionen gering sind und folglich Kältegerätegehäuse mit verbesserter langfristiger Isolationswirkung zu günstigen Kosten bereitgestellt werden können.

Die Folie ist vorzugsweise zwischen dem tiefgezogenen Teil der Schale und der Isolationsmaterialpackung angeordnet. Dadurch ist zum einen die Sperrschicht vor Beschädigung während des Gebrauchs des Kältegeräts geschützt, zum anderen unterscheidet sich das Aussehen von freiliegenden Oberflächen des tiefgezogenen Teils nicht von dem, was die Benutzer von herkömmlichen Kältegeräten gewohnt sind.

Die Folie kann zusammen mit dem Teil der Schale tiefgezogen sein. Da die Materialstärke der Folie im Allgemeinen erheblich kleiner ist als die des tiefgezogenen Teils, kann die Verarbeitung des Schalenteils und der Folie auf herkömmlichen, bisher zur Verarbeitung des Schalenteils allein eingesetzten Tiefziehmaschinen erfolgen.

Als Materialien für die Sperrschicht sind Metall, Polyvinylidenchlorid (PVDC) oder Ethylenvinylalkohol (EVOH) geeignet. Wenn die Folie zusammen mit der Schale tiefgezogen wird, sind insbesondere die letztgenannten Kunststoffe bevorzugt, da bei ihnen die Gefahr, dass sich während des Tiefziehens Löcher in der Sperrschicht bilden, wesentlich geringer ist als bei einer metallischen Sperrschicht.

An ihrer dem Teil der Schale zugewandten Seite weist die Folie vorzugsweise eine Außenschicht aus einem in heißem Zustand klebfähigen Material auf. Da die Folie auch beim Tiefziehen erhitzt wird, kann eine solche Außenschicht für eine flächige Verklebung der Folie an dem Teil der Schale sorgen, ohne dass hierfür ein eigener Verfahrensschritt benötigt würde.

Denkbar ist auch, dass eine dem tiefgezogenen Teil der Schale zugewandte Außenschicht der Folie aus demselben Kunststoff wie besagtes Teil der Schale besteht. Auch die Materialgleichheit kann begünstigen, dass nach dem gemeinsamen Dehnen des Teils der Schale und der Folie beide fest aneinander haften bleiben.

Um die Gefahr zu verringern, dass die Handhabung der Folie während des Zusammenbaus des Gehäuses zu Undichtigkeiten der Sperrschicht führt, kann die Folie zweckmäßigerweise eine von dem Teil der Schale abgewandte Schutzschicht aufweisen.

Gegenstand der Erfindung ist ferner ein Verfahren zum Fertigen eines Kältegerätegehäuses mit den Schritten:
a) Bereitstellen eines plattenförmigen Rohlings aus Kunststoff;
b) Überziehen des Rohlings mit einer Folie, die wenigstens eine Sperrschicht aus einem Material umfasst, das eine höhere Diffusionsdichtigkeit als der Kunststoff des Rohlings aufweist;
c) Tiefziehen des Rohlings, um wenigstens einen Teil einer Schale des Kältegerätegehäuses zu erhalten; und
d) Ausfüllen der Schale mit Isolationsmaterial.

Wenn sich die Folie zum Tiefziehen eignet, ist es sinnvoll, den Rohling vor dem Tiefziehschritt c), während er noch plattenförmig ist, mit der Folie zu überziehen, und anschließend Rohling und Folie gemeinsam tiefzuziehen. Wenn hingegen der Schritt b) des Überziehens mit der Folie erst nach dem Tiefziehen erfolgt, kann auch eine Folie mit einer weniger gut zum Tiefziehen geeigneten Sperrschicht, insbesondere aus Metall, verwendet werden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen horizontalen Schnitt durch ein erfindungsgemäßes Kältegerätegehäuse;
- Fig. 2: einen ersten Schritt der Fertigung des Kältegerätegehäuses gemäß einer ersten Ausgestaltung des erfindungsgemäßen Verfahrens;
- Fig. 3: einen zweiten Fertigungsschritt gemäß der ersten Ausgestaltung des Verfahrens; und
- Fig. 4: einen Schnitt durch ein unfertiges Kältegerätegehäuse gemäß einer zweiten Ausgestaltung der Erfindung.

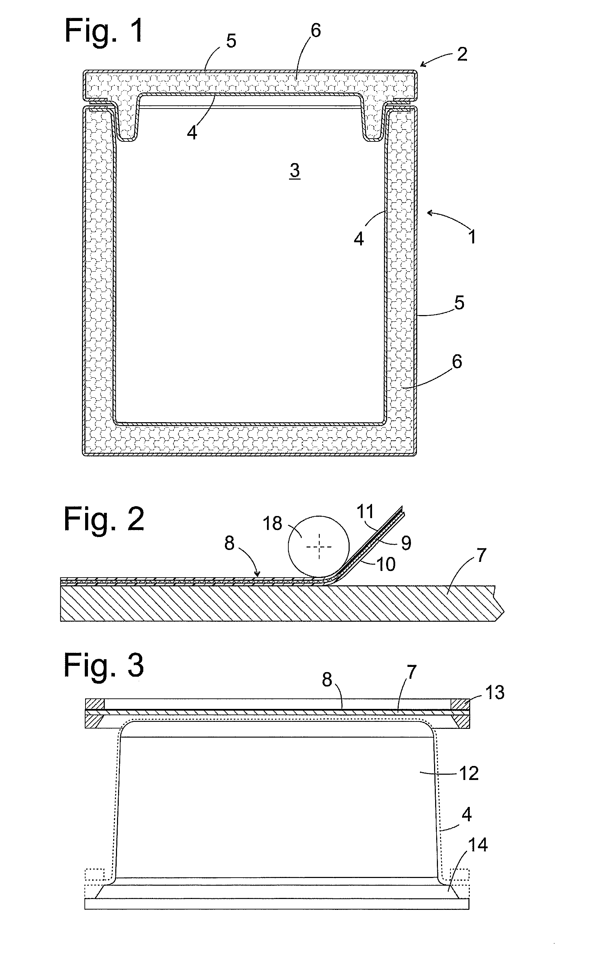

Fig. 1 zeigt einen Horizontalschnitt durch ein Gehäuse eines Kältegeräts mit einem Korpus 1 und einer an den Korpus 1 angelenkten Tür 2, die gemeinsam einen Innenraum 3 begrenzen. Die Struktur von Korpus 1 und Tür 2 ist ähnlich; beide umfassen eine unmittelbar an den Innenraum 3 angrenzende innere Schale 4, eine das sichtbare Äußere des Gerätegehäuses bildende äußere Schale 5 und eine Isolationsmaterialpackung 6, die durch Einspritzen und Expandierenlassen von Polyurethan in einem Zwischenraum zwischen innerer und äußerer Schale 4 bzw. 5 erhalten ist.

Die innere Schale 4 ist aus Kunststoff einteilig tiefgezogen. Die äußere Schale 5 ist aus mehreren Elementen zusammengefügt, die ebenfalls aus Kunststoff, aus Blech, oder, im Falle der Rückseite des Korpus 1, aus metallkaschierter Pappe bestehen können.

Als Treibmittel zum Expandieren des Polyurethans kann insbesondere Pentan verwendet werden. Da dieses Gas ein erheblich höheres Molekulargewicht als Luft aufweist, ist sein Wärmeleitvermögen geringer als das von Luft, und indem es die Poren des fertigen Schaums füllt, wird eine Isolationsmaterialpackung 6 mit ausgezeichneten Dämmeigenschaften erhalten. Um diese Dämmeigenschaften langfristig aufrecht zu erhalten, ist es wichtig, dass das Pentan in den Poren bleibt und nicht durch Bestandteile der Umgebungsluft ersetzt wird.

Dieses Ziel wird einer ersten Ausgestaltung der Erfindung zufolge erreicht, indem ein plattenförmiger Rohling 7 aus Kunststoff, insbesondere aus HIPS oder ABS, wie in Fig. 2 dargestellt, auf einer Seite mit einer Folie 8 überzogen wird, die aus einem hochdiffusionsdichten Kunststoff wie etwa EVOH oder PVDC besteht oder, wie in Fig. 2 dargestellt, eine Sperrschicht 9 aus einem dieser Materialien aufweist. Eine dem Rohling 7 zugewandte Schicht 10 der Folie 8 kann eine Klebstoffschicht sein, so dass die Folie 8 im Moment des Andrückens an den Rohling 7, z.B. mit Hilfe einer Walze 18, fest an diesem haftet. Die Schicht 10 kann aber auch aus einem thermoplastischen Kunststoff bestehen, der nur bei höherer als Raumtemperatur weich und klebrig wird. In diesem Fall kann die Walze beheizt sein, um die Folie 8 vollflächig auf dem Rohling 7 zu verkleben. Die Verklebung gewährleistet ein einheitliches Dehnverhalten von Rohling 7 und Folie 8, d.h. solange der Rohling 7 beim anschließenden Tiefziehen nicht reißt, tut es die Folie 8 auch nicht. Es kann aber auch ausreichen, wenn die Folie 8 am Rohling 7 zunächst wie eine im Haushalt gebräuchliche Frischhaltefolie lediglich durch Adhäsion haftet.

Eine Schutzschicht 11 aus einem strapazierfähigen, insbesondere gegen den Kontakt mit heißem, expandierendem Polyurethanschaum unempfindlichen Kunststoff kann an der von dem Rohling 7 abgewandten Seite der Folie 8 vorgesehen sein.

Der so erhaltene Verbund aus dem Rohling 7 und der Folie 8 wird durch ein an sich bekanntes Tiefziehverfahren weiterverarbeitet. Insbesondere werden der Rohling 7 und die Folie 8, wie in Fig. 3 gezeigt, in einem Rahmen 13 eingeklemmt, durch Erhitzen dehnbar gemacht (was, wenn noch nicht geschehen, zum Verkleben der Folie 8 am Rohling 7 führen kann) und anschließend, wie durch gestrichelte Umrisse angedeutet, auf einen Stempel 12 aufgezogen, dessen Form dem Innenraum 3 des zu fertigenden Gehäuses entspricht. Der Rahmen 13 wird dabei gegen einen Sockelbereich 14 des Stempels 12 gezogen, so dass er luftdicht an diesen anschließt, und durch Abpumpen der zwischen dem Stempel 12 und dem Rohling 7 eingeschlossenen Luft wird der Rohling 7 dazu gebracht, sich vollflächig eng an den Stempel 12 anzuschmiegen. Die Folie 8 wird zusammen mit dem Rohling 7 gedehnt. So wird eine innere Schale 4 erhalten, die an ihrer bei einem fertigen Kältegerät der Isolationsmaterialpackung 6 zugewandten Außenseite eine durchgehende diffusionsdichte Sperrschicht aufweist.

Es liegt auf der Hand, dass eventuelle Kunststoffteile der äußeren Schale 5 in analoger Weise gefertigt werden können.

Der Zusammenbau von innerer und äußerer Schale 4, 5 und das Ausschäumen des dabei erhaltenen Hohlraums erfolgen in an sich bekannter, dem Fachmann vertrauter Weise und brauchen daher hier nicht beschrieben zu werden.

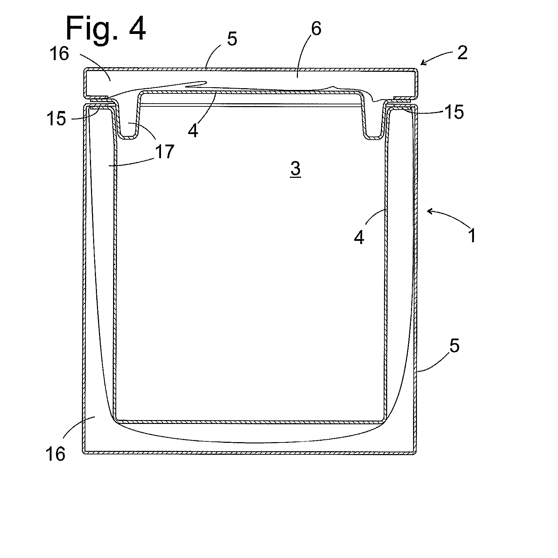

Fig. 4 zeigt einen zu Fig. 1 analogen Schnitt durch ein unfertiges Kältegerätegehäuse gemäß einer zweiten Ausgestaltung der Erfindung. Korpus 1 und Tür 2 umfassen hier jeweils eine innere Schale 4 und eine äußere Schale 5, wobei die innere Schale 4 in fachüblicher Weise jeweils aus einem plattenförmigen Rohling aus homogenem Kunststoff wie etwa HIPS oder ABS tiefgezogen ist. Innere und äußere Schale 4, 5 sind aneinander jeweils an einer Vorderseite 15 des Korpus 1 bzw. einem dieser Vorderseite 15 gegenüberliegenden Rand der Innenseite der Tür 2 miteinander verbunden. Zwischen innerer und äußerer Schale 4, 5 sind jeweils Ränder einer Folie 8 befestigt, deren Struktur dieselbe ist wie oben mit Bezug auf Fig. 2 beschrieben. Abseits der aneinander befestigten Ränder der inneren und äußeren Schale 4, 5 ist die Folie 8 nicht an den Schalen 4, 5 befestigt; sie unterteilt jeweils den von den Schalen 4, 5 begrenzten Hohlraum des Korpus 1 bzw. der Tür 2 in einen Außenbereich 16 und einen Innenbereich 17. Indem Polyurethan in den Außenbereich 16 eingespritzt und darin expandieren gelassen wird, wird die Folie 8 gegen die innere Schale 4 gedrückt und schmiegt sich nach Abschluss des Aufschäumens vollflächig an diese an. Indem, wie insbesondere am Schnitt durch die Tür 2 erkennbar, die Folie 8 mit Übermaß eingebaut wird, kann eine Dehnung der Folie 8 beim Ausschäumen vermieden werden, so dass bei dieser Ausgestaltung für die Sperrschicht 9 nicht nur EVOH oder PVDC, sondern auch Metall, insbesondere Aluminium, eingesetzt werden kann.

Bei dieser Vorgehensweise kommt keine oder allenfalls eine schwache Klebverbindung zwischen der Folie 8 und der inneren Schale 4 zustande, was bei einem späteren Recycling des Geräts die Trennung der inneren Schale 4 von der Isolationsmaterialpackung 6 und eine sortenreine Wiedergewinnung des Materials der inneren Schale 4 erleichtert.

Falls auch die äußere Schale 5 ganz oder teilweise aus einem wenig diffusionsdichten Kunststoff gefertigt ist, können in Weiterbildung der Ausgestaltung der Fig. 4 im Hohlraum zwischen den Schalen 4, 5 auch zwei Folien 8 angeordnet sein, und das Polyurethan wird in einen Zwischenraum zwischen den Folien 8 eingespritzt, so dass bei der Expansion des Polyurethans eine von ihnen gegen die innere Schale 4 und die andere gegen die äußere Schale 5 gedrückt wird.

## Patentansprüche

1. Gehäuse (1,2) für ein Kältegerät mit einer Isolationsmaterialpackung (6) und einer die Isolationsmaterialpackung (6) von der äußeren Umgebung und von einem von dem Gehäuse (1, 2) umschlossenen Innenraum (3) trennenden Schale (4, 5), wobei wenigstens ein Teil (4) der Schale (4, 5) aus Kunststoff tiefgezogen ist, **dadurch gekennzeichnet, dass** der Teil (4) mit einer Folie (8) überzogen ist, die wenigstens eine Sperrschicht (9) aus einem Material umfasst, das eine höhere Diffusionsdichtigkeit als der Kunststoff des Teils (4) der Schale aufweist.

2. Gehäuse nach Anspruch 1, **dadurch gekennzeichnet, dass** die Folie (8) zwischen dem Teil (4) und der Isolationsmaterialpackung (6) angeordnet ist.

3. Gehäuse nach Anspruch 1 oder 2, **dadurch gekennzeichnet, dass** die Folie (8) mit dem Teil (4) der Schale tiefgezogen ist.

4. Gehäuse nach einem der vorhergehenden Ansprüche, **dadurch gekennzeichnet, dass** die Sperrschicht (9) im Wesentlichen Metall, Polyvinylidenchlorid oder Ethylenvinylalkohol enthält.

5. Gehäuse nach einem der vorhergehenden Ansprüche, **dadurch gekennzeichnet, dass** die Folie (8) eine dem Teil (4) der Schale zugewandte Außenschicht (10) aus einem wenigstens in heißem Zustand klebfähigen Material aufweist.

6. Gehäuse nach einem der vorhergehenden Ansprüche, **dadurch gekennzeichnet, dass** die Folie (8) eine dem Teil (4) der Schale zugewandte Außenschicht (10) aufweist, die aus demselben Kunststoff wie das Teil (4) der Schale besteht.

7. Gehäuse nach einem der vorhergehenden Ansprüche, **dadurch gekennzeichnet, dass** die Folie (8) ferner eine von dem Teil (4) der Schale abgewandte Schutzschicht (11) aufweist.

8. Verfahren zum Fertigen eines Kältegerätegehäuses (1, 2) mit den Schritten:
a) Bereitstellen eines plattenförmigen Rohlings (7) aus Kunststoff;
b) Überziehen des Rohlings (7) mit einer Folie (8), die wenigstens eine Sperrschicht (9) aus einem Material umfasst, das eine höhere Diffusionsdichtigkeit als der Kunststoff des Rohlings (7) aufweist;
c) Tiefziehen des Rohlings (7), um wenigstens ein Teil (4) einer Schale (4, 5) des Kältegerätegehäuses (1, 2) zu erhalten;
d) Ausfüllen der Schale (4, 5) mit Isolationsmaterial (6).
